Europäisches Patentamt

European Patent Office

Office européen des brevets

(11) Numéro de publication: **0 352 587 B1**

(12) **FASCICULE DE BREVET EUROPEEN**

(45) Date de publication de fascicule du brevet: **22.09.93**   (51) Int. Cl.⁵: **G01G 7/06**, G01G 19/44

(21) Numéro de dépôt: **89113069.2**

(22) Date de dépôt: **17.07.89**

(54) **Dispositif de pesage électronique.**

(30) Priorité: **25.07.88 FR 8810028**

(43) Date de publication de la demande:
**31.01.90 Bulletin 90/05**

(45) Mention de la délivrance du brevet:
**22.09.93 Bulletin 93/38**

(84) Etats contractants désignés:
**BE CH DE ES GB IT LI NL SE**

(56) Documents cités:
**EP-A- 0 033 705**
**DE-A- 3 721 113**
**FR-A- 1 048 801**
**GB-A- 2 123 157**

(73) Titulaire: **MOULINEX**
**11, rue Jules-Ferry**
**F-93170 Bagnolet(FR)**

(72) Inventeur: **Dauge, Gilbert**
**Société Moulinex 2, rue de l'Industrie**
**Cormelles-Le-Royal F-14123 IFS(FR)**

(74) Mandataire: **May, Hans Ulrich, Dr.**
**Patentanwalt Dr.H.U.May, Thierschstrasse 27**
**D-80538 München (DE)**

Rank Xerox (UK) Business Services
(3.10/3.6/3.3.1)

EP 0 352 587 B1

## Description

L'invention se rapporte à un dispositif de pesage électronique destiné, en particulier, à être monté dans un boîtier de pèse-personne comportant un capteur capacitif formant condensateur de mesure dont la capacité varie en fonction de la masse à mesurer, et qui présente à cet effet une première électrode liée de façon mécanique à un plateau de pesage, et une seconde électrode montée fixe dans le boîtier, ledit condensateur de mesure étant branché à un circuit de mesure.

Ce circuit de mesure comporte un condensateur dit de référence (C0) monté en série avec le condensateur de mesure (C1), chacun de ces condensateurs ayant une électrode reliée à une borne commune aux deux condensateurs et une électrode reliée à une borne externe non commune; un dispositif détecteur de tension nulle dont l'entrée est reliée à ladite borne commune, et dont la sortie est reliée à l'entrée d'un dispositif de traitement de signal dont une première sortie est reliée à l'entrée d'un dispositif d'affichage du résultat de la pesée.

Le brevet GB-A-2123157 décrit un capteur de force utilisable comme dispositif de pesage électronique qui comporte un capteur capacitif C1 à capacité variable en fonction de la masse à mesurer et un condensateur de mesure C2 mis en série. Ce capteur C1 est chargé avec une tension hachée V1 de forme carrée au moyen d'un interrupteur 16. Le signal résultant à la borne commune est transformé par un amplificateur 18 puis un intégrateur 20 en une tension V2 qui est appliquée, après correction de l'atténuateur de température 21, au condensateur C2 au moyen d'un interrupteur 22, de manière que la tension V2 ait la même phase que V1. Les interrupteurs 16 et 22 ont pour fonction de découper les tensions V1 et V2 en un signal carré de même phase et non de faire fonctionner le circuit selon une séquence avec des phases d'initialisation et d'observation. De plus, la mesure dépend de la valeur de la tension V2, d'autant plus qu'il est nécessaire d'introduire dans le circuit un atténuateur de température. Enfin, il n'est pas possible de réaliser ce dispositif sur un circuit intégré monolithique.

L'invention a notamment pour but de réaliser un dispositif de pesage électronique qui puisse être fabriqué en grande série, et qui soit de conception simple et économique tout en assurant une mesure avec une bonne résolution et une grande fidélité.

Elle a également pour but de permettre l'obtention d'un affichage stable du résultat de la pesée lors du pesage de personnes plus ou moins mobiles sur le plateau de pesage.

Le dispositif de pesage électronique de l'invention comporte les éléments définis dans la revendication 1.

L'invention est caractérisée en ce que le circuit de mesure comporte deux commutateurs électroniques 42, 44 pouvant occuper chacun deux états. Ainsi, le dispositif fonctionne selon une séquence se décomposant en au moins deux phases suivant l'état respectif des commutateurs.

- Une phase d'initialisation pour laquelle le condensateur de mesure C1 est chargé (V1) alors que le condensateur de référence C0 est déchargé.
- Une phase d'observation de l'état de la borne commune pour laquelle le condensateur de référence C0 est chargé (V0) alors que le condensateur de mesure C1 est déchargé.

Ainsi on obtient un signal à la borne commune 18 si l'égalité C0V0 = C1V1 n'est pas réalisée. Suivant le signe de ce signal, le détecteur de tension nulle 26 envoie un signal digital VB. Si le signal VB est 1, V1 = V0, si le signal VB est 0, V1 = 0. Grâce à la bascule du dispositif de traitement du signal 34, on compte les impulsions nécessaires pour obtenir la tension ajustée V1 appliquée pour équilibrer la variation de la capacité du condensateur de mesure C1.

L'avantage d'un tel dispositif est qu'il suffit d'utiliser un décompte digital pour mesurer le quotient V1/V0 indépendamment de la valeur de V1. De plus, il n'est pas nécessaire de créer d'autres tensions en dehors de la tension de référence V0. Cette unique tension permet de s'affranchir des risques de décallage en tension de la source d'alimentation et de garantir ainsi un comptage qui donnera une mesure fiable.

Selon un mode particulier de réalisation de l'invention, entre la première sortie du dispositif de traitement du signal et l'entrée du dispositif d'affichage, sont placés une mémoire enregistrant les résultats successifs de la pesée et un calculateur effectuant un moyennage de ces résultats successifs du contenu de la mémoire.

Grâce à ce calculateur qui effectue la moyenne du résultat des pesées sur un temps suffisamment long, l'effet du mouvement du corps de l'usager sur le plateau de pesage devient négligeable.

Les caractéristiques et avantages de l'invention ressortiront d'ailleurs de la description qui va suivre, à titre d'exemple, en référence au dessin annexé dans lequel :

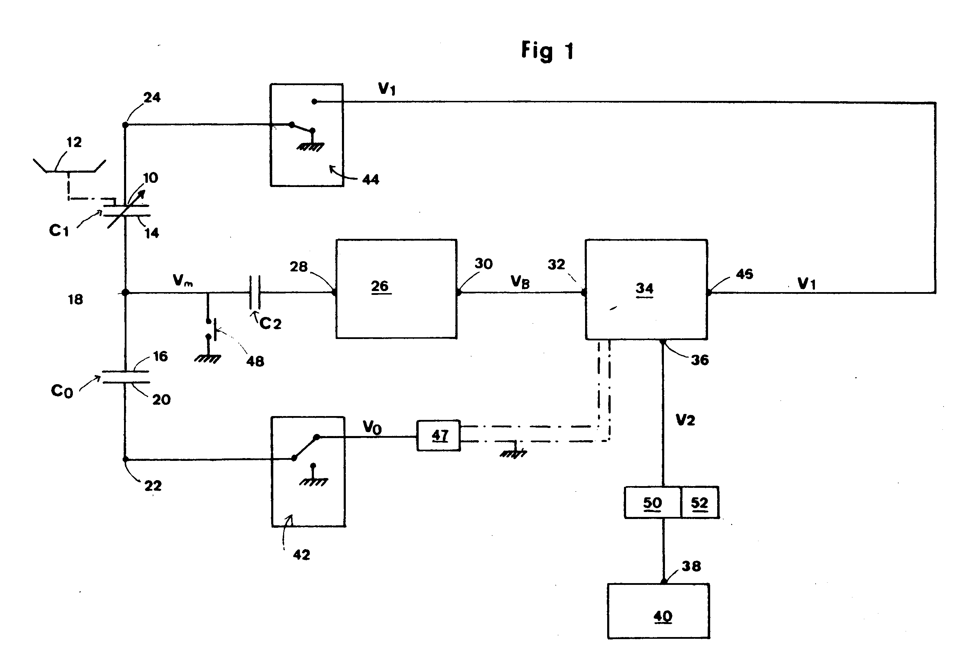

la figure 1 représente un schéma-bloc illustrant un dispositif de pesage électronique selon l'invention.

Le dispositif de pesage électronique est destiné en particulier à être monté dans un boîtier de pèse-personne (non représenté sur le dessin) et comporte un capteur capacitif C1 formant condensateur de mesure dont la capacité varie en fonction de la masse à mesurer et qui présente à cet effet une première électrode 10 liée de façon mécanique à un plateau de pesage 12 et une seconde électrode 14 montée fixe dans le boîtier, ledit condensateur de mesure étant branché à un circuit de mesure.

Ce circuit de mesure comporte : un condensateur dit de référence C0 monté en série avec le condensateur de mesure C1, chacun de ces condensateurs ayant une électrode 14, 16 reliée à une borne 18 commune aux deux condensateurs et une électrode 20,10 reliée à une borne externe non commune22,24 ; un dispositif détecteur de tension nulle 26 comportant, par exemple, un comparateur dynamique (connu en soi) et dont l'entrée 28 est reliée à ladite borne commune 18 par l'intermédiaire d'un troisième condensateur C2 dit condensateur d'entrée et dont la sortie 30 est reliée à l'entrée 32 d'un dispositif de traitement de signal 34 qui comporte, par exemple, une bascule à deux sorties associées à une horloge (non représentée), et dont une première sortie 36 est reliée à l'entrée 38 d'un dispositif d'affichage 40 du résultat de la pesée ; et deux commutateurs électroniques 42, 44 tels que des transistors à effet de champ, dont l'un 42 dit de référence est relié à la borne externe 22 du condensateur de référence C0 et dont l'autre 44 dit de mesure est relié, d'une part à une deuxième sortie 46 du dispositif de traitement du signal 34 et d'autre part, à la borne externe 24 dudit condensateur de mesure C1, les deux commutateurs électroniques 42,44 pouvant occuper chacun deux états successifs , à savoir, un premier état pour lequel les potentiels des bornes externes 22,24 sont portés respectivement à une tension nulle et à une tension ajustée V1, et un deuxième état pour lequel les potensiels des bornes externes 22,24 sont portés respectivement à la tension de référence V0 et à une tension nulle, la tension ajustée V1 étant issue de la deuxième sortie 46 du dispositif de traitement du signal 34 de manière à obtenir un potentiel pratiquement nul à la borne commune 18, la dite tension ajustée V1 étant telle que l'on ait la proportion C1 V1 = C0 V0.

Afin de permettre une réalisation plus fiable du dispositif électronique, le signe des tensions ajustées V1 et de référence V0 sont choisis de même sens.

Afin de s'assurer que le potentiel à la borne commune 18 est bien nul, pendant la phase d'initialisation que l'on expliquera plus loin, le circuit de mesure comporte en outre un interrupteur électronique 48 branché entre la borne commune 18 et la masse du circuit et pouvant occuper deux états, un état fermé reliant la borne commune 18 à ladite masse et un état ouvert pour lequel la borne commune 18 est isolée de ladite masse .

Entre la première sortie 36 du dispositif de traitement du signal et l'entrée 38 du dispositif d'affichage 40, sont branchés une mémoire 50 enregistrant les résultats successifs de la pesée et un calculateur 52 effectuant un moyennage de ces résultats successifs, non contenus dans la mémoire 50.

Le dispositif ainsi constitué fonctionne comme suit. Lors de la mise sous tension de ce dispositif, les deux commutateurs 42, 44 et l'interrupteur 48 occupent successivement leurs deux états respectifs suivant une séquence dépendant de l'horloge interne au dispositif de traitement du signal 34. Cette séquence est divisée en trois phases :

- une phase d'initialisation pour laquelle le commutateur de mesure 44 porte le potentiel de la borne extérieure 24 du condensateur de mesure C1 à la tension ajustée V1, tandis que, d'une part, le commutateur de référence 42 relie le condensateur de référence C0 à la masse, et, d'autre part, l'interrupteur 48 est fermé de façon à garantir que le potentiel de la borne commune 18 est bien nul :

- une phase d'isolation de la borne commune 18 pour laquelle l'interrupteur 48 est ouvert, alors que les deux commutateurs 42, 44 restent dans le même état pour que le condensateur de mesure C1 demeure chargé (les amplificateurs non-représentés internes au détecteur de tension nulle 26et au dispositif de traitement du signal 34 sont remis à zéro pour éviter les phénomènes transitoires ;

- et une phase d'observation de l'état de la borne commune 18, pour laquelle le commutateur de mesure 44 porte la borne externe 24 du condensateur de mesure C1 à un potentiel nul, tandis que le commutateur de référence 42 porte la borne externe 22 du condensateur de référence C0à la tension de référence V0, alors que l'interrupteur 48 demeure ouvert (phase représentée sur la figure 1).

Lors de la pesée, le détecteur de tension nulle 26, détecte la variation de tension intervenue sur la borne commune 18 (dite tension de mesure Vm) apparue à la suite de la commutation de la phase d'observation. Suivant le signe de cette variation, il apparait à la sortie 30 du détecteur de tension nulle 26et donc à l'entrée 32 du dispositif de traitement du signal 34 un signal binaire VB, un pour une variation positive de la tension de mesure, zéro pour une variation négative de la tension de mesure. La valeur du rapport des capacités $\frac{C1}{C0}$ est déduite par le dispositif de traitement du signal 34 grâce au rapport des tensions $\frac{V0}{V1}$ car C1 V1 = C0 V0. Le dispositif de traitement du signal 34 a pour fonction d'équilibrer la valeur de la tension ajustée V1, suivant la valeur du signal binaire VB, au moyen de sa bascule interne à deux sorties, une sortie étant fixée à la tension de référence, l'autre sortie à une tension nulle. Si le signal VB est un la tension ajustée aura la valeur de la tension de référence V0, si le signal binaire est zéro, la tension ajustée aura une valeur nulle. Il suffit alors de compter les impulsions sur chaque sortie de la bascule pendant l'intervalle de temps nécessaire à l'obtention de la valeur de la tension ajustée V1 qui est appliquée par le dispositif 34, lors de l'équilibrage de la variation de la capacité du condensateur de mesure C1, cette valeur étant directement proportionnelle à la pesée.

Ces impulsions, une fois comptées, sont envoyées sous forme d'un signal V2 à la mémoire 50, et au calculateur 52 puis au dispositif d'affichage 40 sur lequel on peut lire le résultat de la pesée.

Le dispositif de pesage selon l'invention permet également de mesurer la pesée d'une personne ne restant pas immobile sur le plateau de pesage 12. On rappelle que la force à mesurer exercée sur ledit plateau 12 correspond à celle qui est due à la pesanteur, additionnée de l'accélération relative de la personne à peser, ceci engendrant donc un signal en forme d'échelon auquel se superpose une ondulation de moyenne nulle autour de la valeur de cet échelon. Ce phénomène ondulatoire est néfaste à une bonne interprétation de la mesure du poids de la personne. Il est donc nécessaire de stabiliser les résultats de la pesée en effectuant une mise en mémoire et un moyennage sur des intervalles de temps successifs assez courts (par exemple une demi-seconde). Dans la mémoire 50 sont stockés pendant des intervalles de temps successifs, des résultats de pesée, et le calculateur effectue une comparaison entre deux résultats successifs de sorte que :

- si deux résultats successifs diffèrent d'une valeur supérieure à une quantité donnée (quelques échelons par exemple), le résultat affiché est alors le dernier résultat enregistré, ce qui permet d'atténuer le phénomène transitoire du début de la pesée ;
- si deux résultats successifs diffèrent de moins de la quantité donnée, les résultats sont gardés en mémoire pendant un intervalle de temps donné suffisant pour assurer la stabilité du résultat de mesure dans les conditions d'utilisation. L'affichage est alors le suivant :
  sur les résultats successifs (P1 jusqu'à Pn) mis en mémoire, on effectue les moyennes successives :

$$\frac{(P1 + P2)}{2} \ldots\ldots\ldots$$

$$\frac{(P1 + P2 +\ldots+Pn)}{n},$$

les valeurs de ces moyennes successives étant alors envoyées au dispositif d'affichage 40. Lorsque le nombre de mesures déterminé par la capacité de la mémoire (Pn résultats) a été pris en compte, de nouveaux résultats de pesée remplacent alors les précédents dans la mémoire.

**Revendications**

1.  Dispositif de pesage électronique destiné, en particulier, à être monté dans un boîtier de pèse-personne et comportant un capteur capacitif (C1) formant condensateur de mesure dont la capacité varie en fonction de la masse à mesurer et qui présente à cet effet une première électrode (10) liée de façon mécanique à un plateau de pesage (12) et une seconde électrode (14) montée fixe dans le boîtier, ledit condensateur de mesure étant branché à un circuit de mesure qui comporte : un condensateur dit de référence (C0) monté en série avec le condensateur de mesure (C1), chacun de ces condensateurs ayant une électrode (14, 16) reliée à une borne (18) commune aux deux condensateurs et une électrode (20, 10) reliée à une borne externe non commune (22, 24) ; un dispositif détecteur de tension nulle (26) dont l'entrée (28) est reliée à l'entrée (32) d'un dispositif de traitement de signal (34) dont une première sortie (36) est reliée à l'entrée (38) d'un dispositif d'affichage (40) du résultat de la pesée,

    **caractérisé en ce que** l'entrée (28) du dispositif détecteur de tension nulle (26) est reliée à la borne commune (18) par l'intermédiaire d'un troisième condensateur dit condensateur d'entrée (C2), et le circuit de mesure comporte en outre deux commutateurs électroniques (42, 44) dont l'un (42) dit de référence est relié à la borne externe (22) du condensateur de référence (C0) et dont l'autre (44) dit de mesure est relié, d'une part à une deuxième sortie (46) du dispositif de traitement du signal (34) et d'autre part, à la borne externe (24) dudit condensateur de mesure (C1), les deux commutateurs électroniques (42, 44) pouvant occuper chacun deux états successifs, à savoir, un premier état pour lequel les potentiels des bornes externes (22, 24) sont portés respectivement à une tension nulle et à une tension ajustée (V1), et un deuxième état pour lequel les potentiels des bornes externes (22, 24) sont portés respectivement à la tension de référence (V0) et à une tension nulle, le dispositif détecteur de tension nulle (26) détectant la variation de tension apparaissant à la borne commune (18) et délivrant un signal binaire ($V_B$) en fonction de ladite variation de tension, et le dispositif de traitement de signal (34) comportant une bascule recevant le signal binaire et ayant deux sorties dont l'une est fixée à la tension de référence ($V_0$) et dont l'autre est fixée à une tension nulle, ainsi que des moyens de comptage des impulsions du signal binaire ($V_B$) présentes sur chaque sortie de la bascule pendant l'intervalle de temps nécessaire à l'obtention de la tension ajustée ($V_1$), laquelle est issue de la deuxième sortie (46) dudit dispositif (34) et doit répondre à la proportion $C_1 V_1 = C_0 V_0$ de manière à obtenir un potentiel pratiquement nul à la borne commune (18).

2. Dispositif de pesage électronique selon la revendication 1,
   **caractérise en ce que** le circuit de mesure comporte en outre un interrupteur (48) branché entre la borne commune (18) et la masse du circuit et pouvant occuper deux états, un état fermé reliant la borne commune (18) à ladite masse et un état ouvert pour lequel la borne commune (18) est isolée de ladite masse.

3. Dispositif de pesage électronique selon la revendication 1 ou la revendication 2,
   **caractérisé en ce que** lesdits commutateurs (42, 44) sont des transistors à effet de champ.

4. Dispositif de pesage électronique selon l'une quelconque des revendications précédentes,
   **caractérisé en ce que,** entre la première sortie (36) du dispositif de traitement du signal (34) et l'entrée (38) du dispositif d'affichage (40), sont branchés une mémoire (50) enregistrant les résultats successifs de la pesée et un calculateur (52) effectuant un moyennage de ces résultats successifs du contenu de la mémoire.

5. Dispositif de pesage électronique selon la revendication 4,
   **caractérisé en ce que,** dans la mémoire (50) sont stokés, pendant des intervalles de temps successifs, des résultats de pesée, et le calculateur effectue une comparaison entre deux résultats successifs de sorte que, si deux résultats successifs diffèrent d'une valeur supérieure à une quantité donnée, le résultat affiché est le dernier, et si deux résultats successifs diffèrent de moins de la quantité donnée, l'affichage sera alors les moyennes successives des résultats stockés dans la mémoire.

## Claims

1. Electronic weighing apparatus adapted, in particular, to be mounted in a casing of bathroom scales, and comprising a capacitive sensor (C1) constituting a measuring capacitor, the capacitance of which varies according to the mass to be measured, and which has for this purpose a first electrode (10) mechanically coupled to a weighing platform (12), and a second electrode (14) fixed in the casing, the said measuring capacitor being connected to a measuring circuit which comprises: a capacitor (C0) referred to as a reference capacitor and connected in series with the measuring capacitor (C1), each of the said capacitors having an electrode (14, 16) connected to a terminal (18) common to the two capacitors and an electrode (20, 10) connected to a non-common external terminal (22, 24); a zero-voltage detecting device (26), the input (28) of which is connected to the input (32) of a signal processing means (34), a first output (36) of which is connected to the input (38) of a display means (40) for displaying the result of the weighing operation,
   **characterised in that** the input (28) of the zero-voltage detecting device (26) is connected to the common terminal (18) through a third capacitor (C2) referred to as an input capacitor, and the measuring circuit further comprises two electronic switches (42, 44), one of which (42), referred to as the reference switch, is connected to the external terminal (22) of the reference capacitor (C0), with the other one (44), referred to as the measuring switch, being connected, firstly to a second output (46) of the signal processing means (34), and secondly to the external terminal (24) of the said measuring capacitor (C1), each of the two electronic switches (42, 44) being capable of assuming two successive states, namely a first state in which the potentials of the external terminals (22, 24) are brought to a zero voltage and an adjusted voltage ($V_1$) respectively, and a second state in which the potentials of the external terminals (22, 24) are brought to the reference voltage ($V_0$) and a zero voltage respectively, the zero-voltage detecting device (26) detecting the variation in voltage appearing at the common terminal (18) and delivering a binary signal ($V_B$) as a function of the said voltage variation, and the signal processing means (34) comprising a flip-flop for receiving the binary signal and having two outputs, one of which is set at the reference voltage ($V_0$),

the other being set at zero voltage, together with means for counting the pulses of the binary signal ($V_B$) present on each output of the flip-flop during the time interval needed for obtaining the adjusted voltage ($V_1$), which is taken from the second output (46) of the said means (34) and which must conform to the proportion $C_1V_1 = C_0V_0$, whereby to obtain a substantially zero potential at the common terminal (18).

2. Electronic weighing apparatus according to Claim 1, **characterised in that** the measuring circuit further includes an interruptor (48), connected between the common terminal (18) and the earth of the circuit, and arranged to assume two states, namely a closed state connecting the common terminal (18) to the said earth, and an open state in which the common terminal (18) is isolated from the said earth.

3. Electronic weighing apparatus according to Claim 1 or Claim 2, **characterised in that** the said switches (42, 44) are field-effect transistors.

4. Electronic weighing apparatus according to any one of the preceding Claims, **characterised in that,** between the first output (36) of the signal processing means (34) and the input (38) of the display means (40), there are connected a memory (50) for containing the successive results of the weighing operation and a computer (52) for averaging the said successive results from the contents of the memory.

5. Electronic weighing apparatus according to Claim 4, **characterised in that** weighing results are stored in the memory (50) during successive time intervals, and the computer makes a comparison between two successive results whereby, if two successive results differ by a value in excess of a given amount, the displayed result is the later one, and if two successive results differ by less than the given amount, the display will then be the successive averages of the results stored in the memory.

**Patentansprüche**

1. Elektronische Wiegevorrichtung, insbesondere zum Einbau in einem Gehäuse einer Personenwaage, mit einen kapazitiven Fühler (C1), der einen Meßkondensator bildet, dessen Kapazität sich in Abhängigkeit von der zu messenden Masse verändert und der zu diesem Zweck eine mechanisch mit einer Wiegeplatte (12) verbundene erste Elektrode (10) und eine im Gehäuse feststehend montierte zweite Elektrode (14) aufweist, wobei der Meßkondensator in einem Meßkreis liegt, der folgende Elemente aufweist: einen Referenzkondensator (C0), der in Reihe mit dem Meßkondensator (C1) liegt, wobei jeder dieser Kondensatoren eine mit einer beiden Kondensatoren gemeinsamen Klemme (18) verbundene Elektrode (14,16) und eine mit einer nicht gemeinsamen äußeren Klemme (22,24) verbundene Elektrode (20,10) aufweist; und ferner mit einem Nullspannungsdetektor (26), dessen Eingang (28) mit dem Eingang (32) einer Signalverarbeitungsvorrichtung (34) verbunden ist, von der ein erster Ausgang (36) mit dem Eingang (38) einer Anzeigevorrichtung (40) des Ergebnisses der Wägung verbunden ist, **dadurch gekennzeichnet,** daß der Eingang (24) des Nullspannungsdetektors (26) mit der gemeinsamen Klemme (18) mittels eines dritten Kondensators, des sogenannten Eingangskondensators (C2) verbunden ist und der Meßkreis außerdem zwei elektronische Schalter (42,44) aufweist, von denen der eine, der sogenannte Referenzschalter (42), mit der äußeren Klemme (22) des Referenzkondensators (C0) und von denen der andere, der sogenannte Meßschalter (44), einerseits mit einem zweiten Ausgang (46) der Signalverarbeitungsvorrichtung (34) und andererseits mit der äußeren Klemme (24) des Meßkondensators (C1) verbunden ist, wobei die zwei elektronischen Schalter (42,44) jeder zwei aufeinanderfolgende Zustände einnehmen können, nämlich einen ersten Zustand, in welchem die Potentiale der äußeren Klemmen (22,24) auf die Spannung null beziehungsweise eine gesteuerte Spannung (V1) gebracht sind, und einen zweiten Zustand, in welchem die Potentiale der äußeren Klemmen (22,24) auf die Referenzspannung (V0) beziehungsweise auf die Spannung null gebracht sind, wobei der Nullspannungsdetektor (26) die an der gemeinsamen Klemme (18) auftretende Spannungsveränderung feststellt und in Abhängigkeit von dieser Spannungsveränderung ein Binärsignal (VB) liefert und die Signalverarbeitungsvorrichtung (34) einen Flip-Flop aufweist, der das Binärsignal empfängt und zwei Ausgänge hat, von denen der eine an der Referenzspannung (V0) und der andere an der Spannung Null liegt, sowie eine Vorrichtung zur Zählung der Impulse des Binärsignals (VB) aufweist, welche an jedem Ausgang des Flip-Flops während des zur Erreichung der gesteuerten Spannung (V1) notwendigen Zeitdauer auftreten, wobei die gesteuerte Spannung vom zweiten Ausgang (46) der Vorrichtung (34) abgegeben wird und dem Verhältnis C1V1 = C0V0 entsprechen muß, um ein Potential von praktisch null an der gemeinsamen Klemme (18) zu erhalten.

2. Elektronische Wiegevorrichtung nach Anspruch 1, **dadurch gekennzeichnet,** daß der Meßkreis außerdem einen zwischen der gemeinsamen Klemme (18) und der Masse des Kreises liegenden Schalter (48) aufweist, der zwei Zustände einnehmen kann, einen geschlossenen Zustand, in welchem er die gemeinsame Klemme (18) mit der Masse verbindet, und einen offenen Zustand, in welchem die gemeinsame Klemme (18) von der Masse isoliert ist.

3. Elektronische Wiegevorrichtung nach Anspruch 1 oder 2, **dadurch gekennzeichnet,** daß die Schalter (42,44) Feldeffekttransistoren sind.

4. Elektronische Wiegevorrichtung nach einem der vorangehenden Ansprüche, **dadurch gekennzeichnet,** daß zwischen dem ersten Ausgang (36) der Signalverarbeitungsvorrichtung (34) und dem Eingang (38) der Anzeigevorrichtung (40) ein Speicher (50), der die aufeinanderfolgenden Wägeergebnisse registriert, und ein Rechner (52) eingeschaltet sind, der eine Mittelung dieser aufeinanderfolgenden Ergebnisse des Inhalts des Speichers durchführt.

5. Elektronische Wiegevorrichtung nach Anspruch 4, **dadurch gekennzeichnet,** daß im Speicher (50) während aufeinanderfolgender Zeitintervalle Wägeergebnisse gespeichert werden und der Rechner einen Vergleich zwischen zwei aufeinanderfolgenden Ergebnissen in der Weise durchführt, daß wenn zwei aufeinanderfolgende Ergebnisse um einen Wert größer als ein bestimmter Betrag differieren, das angezeigte Ergebnis das letzte ist, und wenn zwei aufeinanderfolgende Ergebnisse um weniger als der bestimmte Betrag differieren, die Anzeige die aufeinanderfolgenden Mittelwerte der im Speicher gespeicherten Ergebnisse ist.

Fig 1